# EUROPEAN PATENT SPECIFICATION

(11) **EP 2 316 610 B1**
(45) Date of publication and mention of the grant of the patent: **20.03.2013**
(21) Application number: 09174244.5
(22) Date of filing: 27.10.2009
(51) Int. Cl.: B23Q 3/155, B23Q 3/157, B23Q 17/22

(54) **Multi-spindle machining machine with tool changing mechanism**
Mehrspindel-Arbeitsmaschine mit Werkzeugwechselmechanismus
Machine d'usinage à plusieurs axes avec un mécanisme de changement d'outil

(43) Date of publication of application: 04.05.2011
(73) Proprietor: Shenq Fang Yuan Technology Co., Ltd., Taichung 408 (Province of China) (TW)
(72) Inventor: Shih, Cheng Hsiu, 408 Taichung (TW)
(74) Representative: Chaillot, Geneviève

(56) References cited:
- DE-A1- 10 034 973
- DE-A1- 19 708 096
- FR-A1- 2 599 654
- US-A- 6 039 680

## Description

### BACKGROUND OF THE INVENTION

### Field of the Invention

The present invention relates to an automatic machining machine, and more particularly to a multi-spindle machining machine with a tool changing mechanism which can lower size and production cost and enhance tool changing efficiency.

### Description of the Prior Art

Conventional tool changing mechanism of a machining machine is disposed within a moving range of a carrier of a base and outside a working range of a working head, and a tool deposit is driven by another set of driving device, thus increasing size, production cost, and tool changing time.

Besides, a height of another conventional machining machine is high to increase the length and the width thereof, thereof also increasing size, production cost, and tool changing time.

DE-10034973 discloses a machine according to the preamble of claim 1.

The present invention has arisen to mitigate and/or obviate the afore-described disadvantages.

### SUMMARY OF THE INVENTION

The primary object of the present invention is to provide a multi-spindle machining machine with a tool changing mechanism which can lower size and production cost and enhance tool changing efficiency.

Such a multi-spindle machining machine with a tool changing mechanism is defined in claim 1.

### BRIEF DESCRIPTION OF THE DRAWINGS

Fig. 1 is a perspective view showing the assembly of a multi-spindle machining machine with a tool changing mechanism in accordance with a first embodiment of the present invention;
Fig. 2 is a partial amplified view of the multi-spindle machining machine with the tool changing mechanism in accordance with the first embodiment of the present invention;
Fig. 3 is an amplified view of a tool changing mechanism of the multi-spindle machining machine in accordance with the first embodiment of the present invention;
Fig. 4 is a cross sectional view of the tool changing mechanism of the multi-spindle machining machine in accordance with the first embodiment of the present invention;
Fig. 5 is a cross sectional view showing the operation of the tool changing mechanism of the multi-spindle machining machine in accordance with the first embodiment of the present invention;
Fig. 6 is a cross sectional view showing a mount of the tool changing mechanism of the multi-spindle machining machine in accordance with a second embodiment of the present invention;
Fig. 7 is another cross sectional view showing the mount of the tool changing mechanism of the multi-spindle machining machine in accordance with a third embodiment of the present invention;
Fig. 8 is a cross sectional view showing the operation of a dust collecting mechanism of the tool changing mechanism of the multi-spindle machining machine in accordance with the first embodiment of the present invention;
Fig. 9 is another cross sectional view showing the operation of the dust collecting mechanism of the tool changing mechanism of the multi-spindle machining machine in accordance with the first embodiment of the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

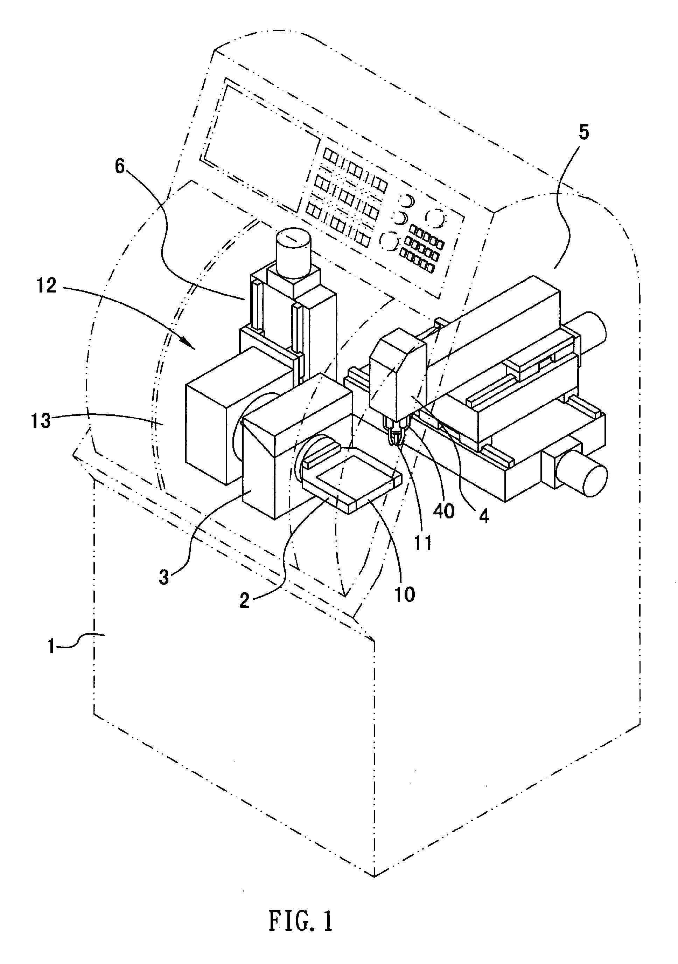

Referring to Fig. 1, a multi-spindle machining machine with a tool changing mechanism in accordance with a preferred embodiment of the present invention comprises a base 1, a carrier 2, a tool changing mechanism 3, a working head 4, a lateral driving device 5, and a vertical driving device 6, wherein
the base 1 includes a chamber 12 to move the carrier 2 and the working head 4 so as to have a working process therein. The chamber 12 includes a transparent cover 13 disposed on one side thereof to be turned, to monitor the working process and to be opened to install the workpiece 10 onto the carrier 2 or to remove the workpiece 10 from the carrier 2.

The carrier 2 is provided to move the workpiece 10 in the chamber 12 to move in Z axis.

The tool changing mechanism 3 is assembled to the carrier 2 to receive a plurality of tools 11 and to move vertically with the carrier 2. The tool 11 is a milling cutter, a drill, and a grinding cutter, etc.

The working head 4 moves above the carrier 2 and the tool changing mechanism 3 in X and Y axes and includes a driving spindle 40 mounted on a lower end thereof to rotate axially, and the lower end of the driving spindle 40 allows to engage and disengage the tool 11 of the tool changing mechanism 3. The driving spindle 40 allows to clamp the tool 11 to have a cutting, drilling, and grinding process.

The lateral driving device 5 is located on a back side of the chamber 12 to drive the working head 4 to move laterally.

The vertical driving device 6 is located on a left side of the chamber 12 to drive the carrier 2 to move vertically.

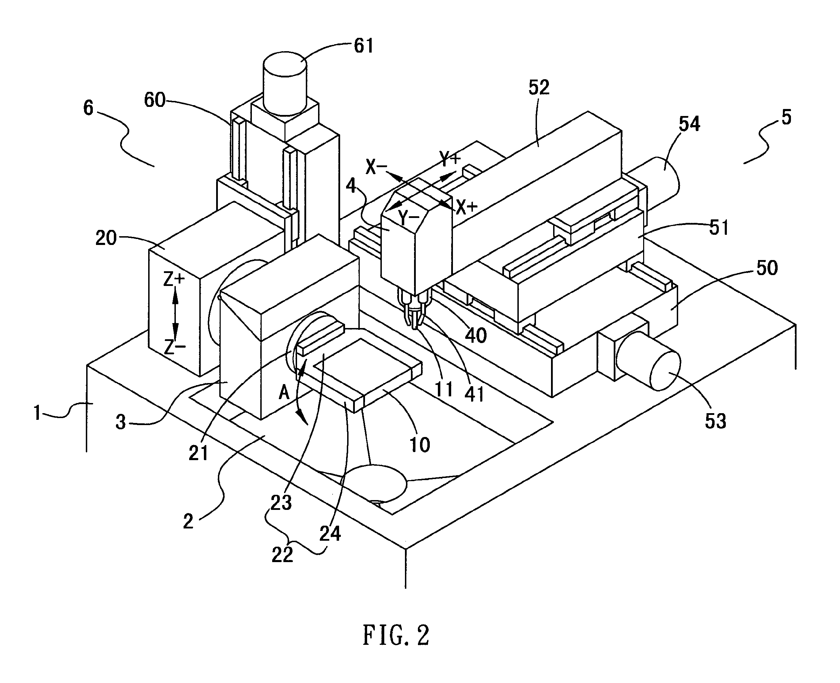

Referring to Fig. 2, the carrier 2 includes a seat 20, a rotary shaft 21, and a fixing holder 22. The seat 20 allows to move in Z axis, the rotary shaft 21 is fixed on the seat 20 laterally and drives the seat 20 to rotate in A axis by using an air cylinder, and a servo motor. The fixing holder 22 includes a lateral shank 23 and two positioning rods 24, the lateral shank 23 is coupled to the rotary shaft 21, and the two positioning rods 24 extend vertically from two ends of the lateral shank 23 to fix the workpiece 10 thereon so that two upper and lower opposite sides expose between the two positioning rods 24. The fixing holder 22 is designed to have different structures based on different shapes of workpiece 10. For example, the fixing holder 22 is formed in a square shape to match with a circular fixing holder to clamp the workpiece 10, and the fixing holder 22 is formed to match with a cylindrical workpiece to clamp or insert a paw or sleeve.

The working head 4 includes at least one nozzle 41 to spray cutting oil or air.

The lateral driving device 5 includes a first guiding member 50, a second guiding member 51, a work pedestal 52, a first driver 53, and a second driver 54. The first guiding member 50 is mounted on the base 1, the second guiding member 51 is fixed on the first guiding member 50 to move along the X axis. The work pedestal 52 is secured to the second guiding member 51 to move along the Y axis, the first diver 53 is a servo motor and is disposed on the first guiding member 50 to drive the second guiding member 51 to move. The second driver 54 is a serve motor and is fixed on the second guiding member 51 to drive the work pedestal 52 to move. The working head 4 is connected to the work pedestal 52.

The vertical driving device 6 includes a third guiding member 60 and a third driving driver 61. The third guiding member 60 is disposed on the base 1, the seat 20 of the carrier 2 is fixed on the third guiding member 60 to move along the Z axis. The third driver 61 is secured on the third guiding member 60 to drive the seat 20 to move.

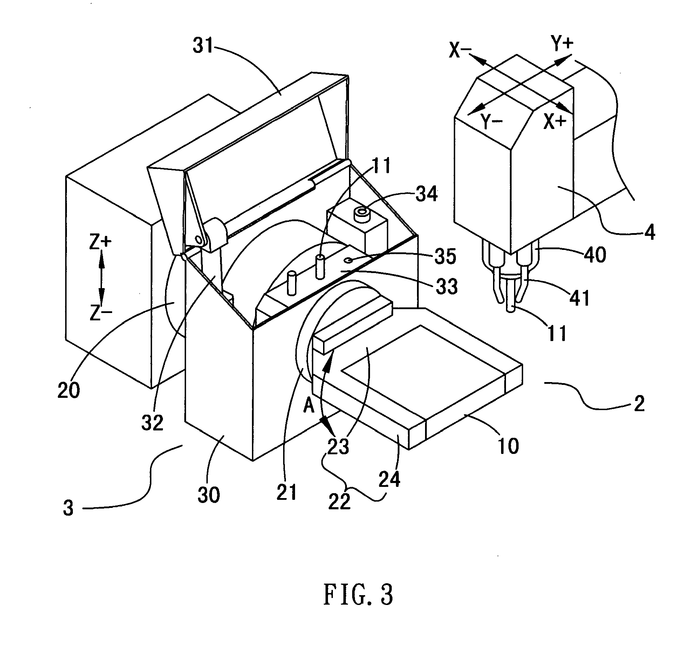

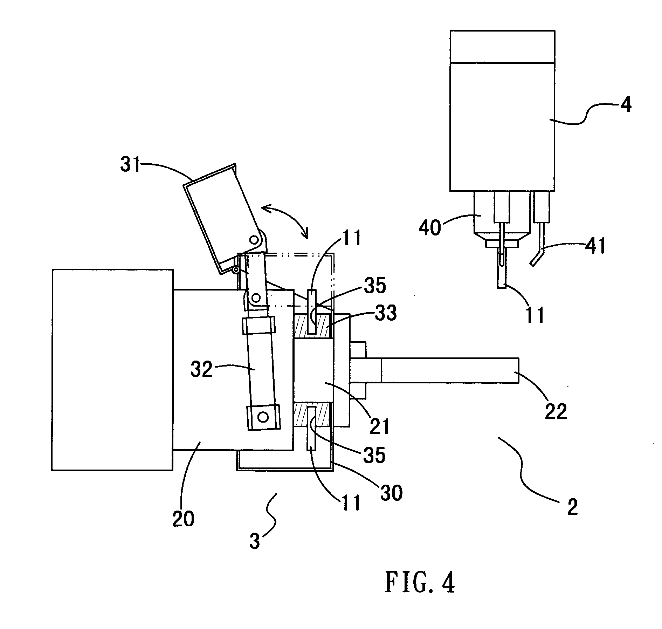

As shown in Figs. 3 and 4, the tool changing mechanism 3 includes a case 30, a housing 31, a driving member 32, a mount 33, and a monitor 34, wherein
the case 30 is assembled to the seat 20 to be inserted by the rotary shaft 21, and includes an opening formed on an upper end thereof.

The housing 31 is assembled to the case 30 to open or close the opening of the case 30.

The driver 32 is disposed in the case 3 to drive the housing 31 to be open or close the opening of the case 30.

The mount 33 is mounted to the rotary shaft 21 and located at the case 30 to rotate with the rotary shaft 21, and includes a plurality of slots 35 to receive the tools 11 respectively.

The monitor 34 is fixed on the seat 20 and located at the case 30 to measure a length of the tool 11 clamped on the driving spindle 40.

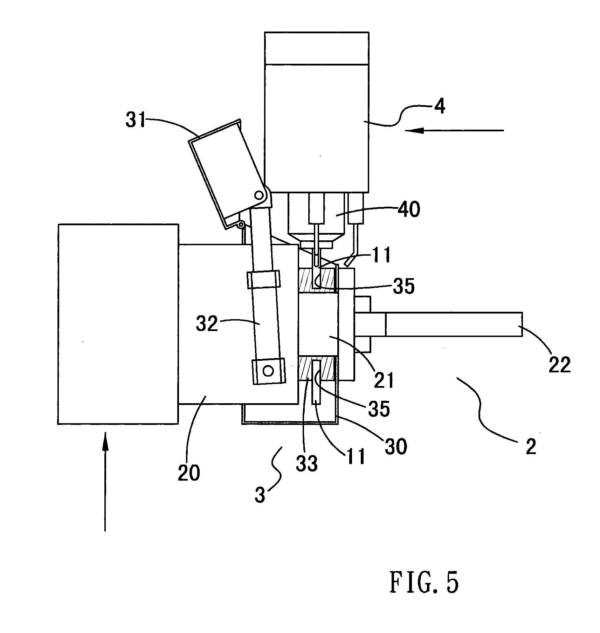

As illustrated in Figs. 3-5, when changing the tools 11, the driving member 32 drives the housing 31 to open the opening of the case 30, and the working head 4 moves above the case 30 laterally. Thereafter, the seat 20 of the carrier 2 moves upward to insert the tool 11 of the driving spindle 40 to an empty slot 35, and the driving spindle 40 releases the tool 11, and the seat 20 moves downward to make the mount 33 rotate to a desired tool 11 under the driving spindle 40, and then the seat 20 moves upward and the driving spindle 40 engages the tool 11. After the driving spindle 40 engages the tool 11, the seat 20 moves vertically and the working head 4 moves horizontally to cooperate with the monitor 34 to measure the length of the tool 11 on the driving spindle 40, such that the opening of the case 30 is closed to finish onetime of tool changing operation.

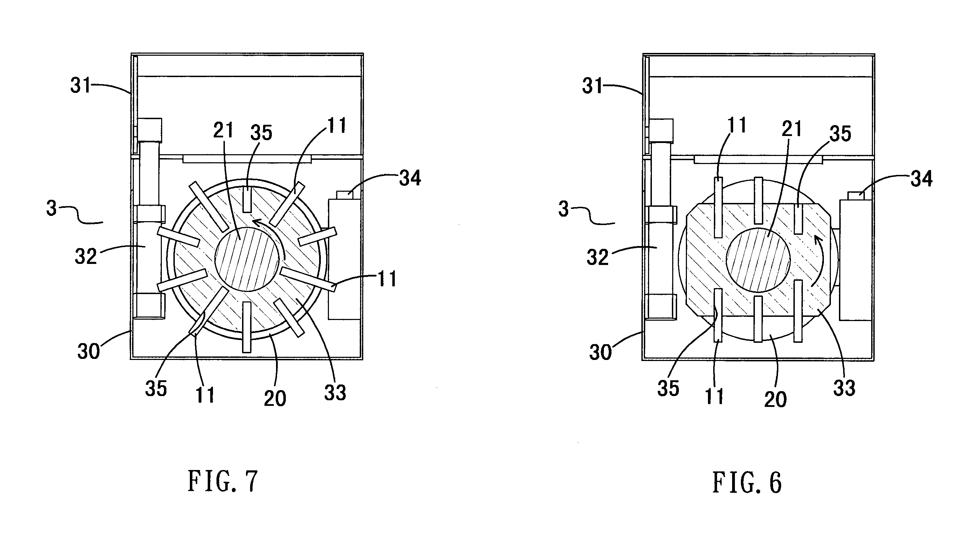

Referring to Fig. 6, a mount 33 of the multi-spindle machining machine with a tool changing mechanism according to a second embodiment of the present invention includes a plurality of slots 35 formed on an upper and a lower side surfaces in a line arrangement, and the rotary shaft 21 actuates the mount 33 to rotate 180 degrees/pre time.

Referring to Fig. 7, a mount 33 of the multi-spindle machining machine with a tool changing mechanism according to a third embodiment of the present invention includes a plurality of slots 35 formed on an upper and a lower side surface in an annularly spaced arrangement, and the rotary shaft 21 actuates the mount 33 to an angle so that a distal end of one of the tools 11 faces upward.

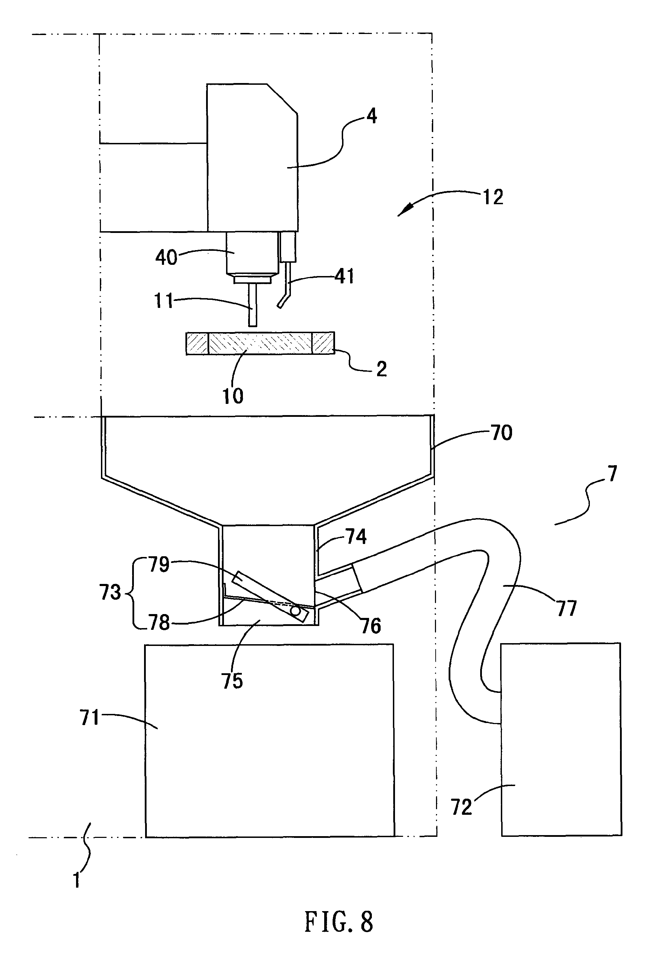

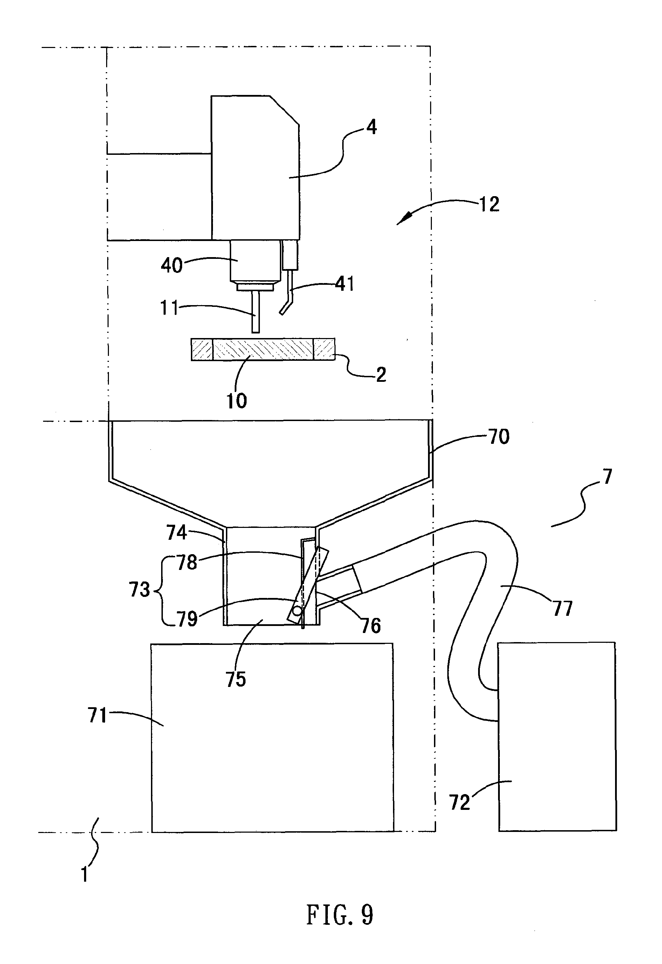

With reference to Figs. 8 and 9, the chamber 12 of the base 1 includes a dust collecting mechanism 7 to collect chips and cutting oil generating from the nozzle 41. The dust collecting mechanism 7 includes a groove 70, a tank 71, a dust collector 72, and a switching device 73, wherein

the groove 70 is disposed on a lower side of the carrier 2 of the base 1 and formed in a funnel shape to receive the chips and the cutting oil generating from a working process, and includes a pipe 74 communicating with a bottom portion thereof, the pipe 74 includes a first outlet 75 on a bottom end thereof and a second outlet 76 on a wall of one side thereof.

The tank 71 is located below the first outlet 75 to receive the cutting oil falling from the first outlet 75.

The dust collector 72 is connected to the second outlet 76 by using a connecting tube 77 so as to draw chips from the second outlet 76.

The switching device 73 includes a plate member 78 and a controlling pillar 79. The plate member 78 is disposed in the pipe 74 to movably cover the first outlet 75 and the second outlet 76. The controlling pillar 79 is disposed outside the pipe 74 to drive the plate member 78 to swing.

As shown in Fig. 8, when the controlling pillar 79 drives the plate member 78 to cover the first outlet 75, the dust collector 72 is started to draw wind and control the nozzle 41 to stop spraying cutting oil, having a dry cutting process.

As illustrated in Fig. 9, when the controlling pillar 79 drives the plate member 78 to cover the second outlet 76, the dust collector 72 is closed automatically to control the nozzle 41 to spray cutting oil, having a wet cutting process.

## Claims

1. A multi-spindle machining machine with a tool changing mechanism comprising:
a base (1);
a carrier (2) including a seat (20) movable in Z axis, a rotary shaft (21), and a fixing holder (22), the rotary shaft (21) being fixed on the seat (20) and driving the seat (20) to rotate in A axis, the fixing holder (22) being coupled to an end portion of the rotary shaft (21) to fix a workpiece (10) thereon;
a tool changing mechanism (3) including a mount (33), the mount (33) being mounted to the rotary shaft (21) so as to rotate with the rotary shaft (21), and including a plurality of slots (35) to receive the tools (11) respectively;
a working head (4) moving above the carrier (2) and the tool changing mechanism (3) in X and Y axes and including a driving spindle (40) mounted on an end thereof to rotate axially, and the lower end of the driving spindle (40) allowing to engage and disengage the tool (11) of the tool changing mechanism (3);
**characterized in that**
the rotary shaft (21) is fixed on the seat (20) laterally;
the tool changing mechanism (3) includes a monitor (34) fixed on the seat (20) to measure a length of the tool (11) clamped on a driving spindle (40);
the driving spindle (40) is mounted on a lower end of the working head (4);
the tool changing mechanism (3) includes a case (30) and a housing (31), the case (30) is assembled to the seat (20) to be inserted by the rotary shaft (21) and to receive the mount (33) and the monitor (34), and includes an opening formed on an upper end thereof, and the housing (31) is assembled to the case (30) to open or close the opening of the case (30).

2. The multi-spindle machining machine with the tool changing mechanism as claimed in claim 1, wherein the slots (35) are formed on an upper and a lower side surfaces in a line arrangement of the mount (33).

3. The multi-spindle machining machine with the tool changing mechanism as claimed in claim 1, wherein the slots (35) are formed on an upper and a lower side surface of the mount (33) in an annularly spaced arrangement.

4. The multi-spindle machining machine with the tool changing mechanism as claimed in claim 1 further comprising a lateral driving device (5) and a vertical driving device (6), the lateral driving device (5) is located on the base (1) to drive the working head (4) to move laterally, the vertical driving device (6) is fixed on the base (1) and located on a front end of one side of the lateral driving device (5) to drive the seat (20) to move vertically along the one side of the lateral driving device (5).

5. The multi-spindle machining machine with the tool changing mechanism as claimed in claim 4, wherein the lateral driving device (5) includes a first guiding member (50), a second guiding member (51), a work pedestal (52), a first driver (53), and a second driver (54), the first guiding member (50) is mounted on the base (1), the second guiding member (51) is fixed on the first guiding member (51) to move along the X axis, the work pedestal (52) is secured to the second guiding member (51) to move along the Y axis, the first diver (53) is disposed on the first guiding member (50) to drive the second guiding member (51) to move, the second driver (54) is fixed on the second guiding member (51) to drive the work pedestal (52) to move, the working head (4) is connected to the work pedestal (52);
the vertical driving device (6) includes a third guiding member (60) and a third driving driver (61), the third guiding member (60) is disposed on the base (1), the seat (20) is fixed on the third guiding member (60) to move along the Z axis, the third driver (61) is secured on the third guiding member (60) to drive the seat (20) to move.

6. The multi-spindle machining machine with the tool changing mechanism as claimed in claim 5, wherein the working head (4) includes at least one nozzle (41) to spray cutting oil or air, and the multi-spindle machining machine with the tool changing mechanism (3) further includes a dust collecting mechanism ((7) having a groove (70), a tank (71), a dust collector (72), and a switching device (73), wherein the groove (70) is disposed on a lower side of the carrier (2) of the base (1), and includes a pipe (74) communicating with a bottom portion thereof, the pipe (74) includes a first outlet (75) on a bottom end thereof and a second outlet (76) on a wall of one side thereof, the dust collector (72) is connected to the second outlet (76) by using a connecting tube (77), the switching device (73) includes a plate member (78) and a controlling pillar (79), the plate member (78) is disposed in the pipe (74) to movably cover the first outlet (75) and the second outlet (76), the controlling pillar (79) being disposed outside the pipe (74) to drive the plate member (78) to swing.

7. The multi-spindle machining machine with the tool changing mechanism as claimed in claim 6, wherein when the controlling pillar (79) drives the plate member (78) to cover the first outlet (75), the dust collector (72) is started to draw wind and control the nozzle (41) to stop spraying cutting oil; and when the controlling pillar (79) drives the plate member (78) to cover the second outlet (76), the dust collector (72) is closed automatically to control the nozzle (41) to spray cutting oil.

8. The multi-spindle machining machine with the tool changing mechanism as claimed in claim 1, wherein the fixing holder (22) includes a lateral shank (23) and two positioning rods (24), the lateral shank (23) is coupled to the rotary shaft (21), and the two positioning rods (24) extend vertically from two ends of the lateral shank (23) to fix the workpiece (10) thereon.

## Patentansprüche

1. Mehrspindel-Bearbeitungsmaschine mit Werkzeugwechselmechanismus, umfassend:
einen Fuß (1);
einen Träger (2), der eine Aufnahme (20), die in der Z-Achse beweglich ist, eine sich drehende Welle (21) und einen Befestigungshalter (22) aufweist, wobei die sich drehende Welle (21) an der Aufnahme (20) befestigt ist und die Aufnahme (20) antreibt, damit sie sich in der A-Achse dreht, wobei der Befestigungshalter (22) mit einem Endabschnitt der sich drehenden Welle (21) verbunden ist, um ein Werkstück (10) daran zu befestigen;
einen Werkzeugwechselmechanismus (3), der eine Halterung (33) aufweist, wobei die Halterung (33) an der sich drehenden Welle (21) montiert ist, um sich mit der sich drehenden Welle (21) zu drehen, und eine Vielzahl von Schlitzen (35) aufweist, um jeweils die Werkzeuge (11) aufzunehmen,
einen Arbeitskopf (4), der sich über dem Träger (2) und dem Werkzeugwechselmechanismus (3) in der X- und Y-Achse bewegt und eine Antriebsspindel (40) aufweist, die an einem Ende davon montiert ist, um sich axial zu drehen, und wobei das untere Ende der Arbeitsspindel (40) ermöglicht, in das Werkzeug (11) des Werkzeugwechselmechanismus (3) einzugreifen und sich davon zu lösen;
**dadurch gekennzeichnet, dass**
die sich drehende Welle (21) seitlich an der Aufnahme (20) befestigt ist;
der Werkzeugwechselmechanismus (3) eine Kontrolleinrichtung (34) aufweist, die an der Aufnahme (20) befestigt ist, um eine Länge des Werkzeugs (11) zu messen, das an einer Antriebsspindel (40) befestigt ist;
die Antriebsspindel (40) an einem unteren Ende des Arbeitskopfs (4) montiert ist;
der Werkzeugwechselmechanismus (3) einen Kasten (30) und ein Gehäuse (31) aufweist, der Kasten (30) an der Aufnahme (20) angebracht ist, um von der sich drehenden Welle (21) eingeführt zu sein, und um die Halterung (33) und die Kontrolleinrichtung (34) aufzunehmen, und eine Öffnung aufweist, die an einem oberen Ende davon geformt ist, und das Gehäuse (31) an dem Kasten (30) montiert ist, um die Öffnung des Kastens (30) zu öffnen oder zu verschließen.

2. Mehrspindel-Bearbeitungsmaschine mit Werkzeugwechselmechanismus nach Anspruch 1, wobei die Schlitze (35) an einer oberen und einer unteren Seitenfläche in einer Reihenanordnung der Halterung (33) geformt sind.

3. Mehrspindel-Bearbeitungsmaschine mit Werkzeugwechselmechanismus nach Anspruch 1, wobei die Schlitze (35) an einer oberen und einer unteren Seitenfläche der Halterung (33) in einer ringförmig beabstandeten Anordnung geformt sind.

4. Mehrspindel-Bearbeitungsmaschine mit Werkzeugwechselmechanismus nach Anspruch 1, ferner umfassend eine seitliche Antriebsvorrichtung (5) und eine senkrechte Antriebsvorrichtung (6), die seitliche Antriebsvorrichtung (5) ist auf dem Fuß (1) befindlich, um den Arbeitskopf (4) anzutreiben, damit er sich seitlich bewegt, die senkrechte Antriebsvorrichtung (6) ist auf dem Fuß (1) befestigt und an einem vorderen Ende einer Seite der seitlichen Antriebsvorrichtung (5) befindlich, um die Aufnahme (20) anzutreiben, damit sie sich senkrecht entlang der einen Seite der seitlichen Antriebsvorrichtung (5) bewegt.

5. Mehrspindel-Bearbeitungsmaschine mit Werkzeugwechselmechanismus nach Anspruch 4, wobei die seitliche Antriebsvorrichtung (5) ein erstes Führungselement (50), ein zweites Führungselement (51), einen Arbeitsmontageblock (52), einen ersten Antrieb (53) und einen zweiten Antrieb (54) aufweist, das erste Führungselement (50) auf dem Fuß (1) montiert ist, das zweite Führungselement (51) auf dem ersten Führungselement (51) befestigt ist, um sich entlang der X-Achse zu bewegen, der Arbeitsmontageblock (42) an dem zweiten Führungselement (51) befestigt ist, um sich entlang der Y-Achse zu bewegen, der erste Antrieb (53) an dem ersten Führungselement (50) angeordnet ist, um das zweite Führungselement (51) anzutreiben, damit es sich bewegt, der zweite Antrieb (54) an dem zweiten Führungselement (51) befestigt ist, um den Arbeitsmontageblock (52) anzutreiben, damit er sich bewegt, der Arbeitskopf (4) mit dem Arbeitsmontageblock (52) verbunden ist;
die senkrechte Antriebsvorrichtung (6) ein drittes Führungselement (60) und einen dritten antreibenden Antrieb (61) aufweist, das dritte Führungselement (60) auf dem Fuß (1) angeordnet ist, die Aufnahme (20) an dem dritten Führungselement (60) befestigt ist, um sich entlang der Z-Achse zu bewegen, der dritte Antrieb (61) an dem dritten Führungselement (60) befestigt ist, um die Aufnahme (20) anzutreiben, damit sie sich bewegt.

6. Mehrspindel-Bearbeitungsmaschine mit Werkzeugwechselmechanismus nach Anspruch 5, wobei der Arbeitskopf (4) mindestens eine Düse (41) zum Versprühen von Schneidöl oder Luft aufweist, und die Mehrspindel-Bearbeitungsmaschine mit dem Werkzeugwechselmechanismus (3) ferner einen Staubsammelmechanismus (7) aufweist, der einen Kanal (70), einen Behälter (71), eine Staubsammelvorrichtung (72) und eine Umstelleinrichtung (73) aufweist, wobei der Kanal (70) an einer unteren Seite des Trägers (2) des Fußes (1) angeordnet ist und ein Rohr (74) aufweist, das mit einem unteren Abschnitt davon in Verbindung steht, das Rohr (74) einen ersten Auslass (75) an einem unteren Ende davon und einen zweiten Auslass (76) an einer Wand von einer Seite davon aufweist, die Staubsammelvorrichtung (72) unter Verwendung einer Verbindungsröhre (77) mit dem zweiten Auslass (76) verbunden ist, die Umstelleinrichtung (73) ein Plattenelement (78) und eine Steuerstütze (79) aufweist, das Plattenelement (78) in dem Rohr (74) angeordnet ist, um beweglich den ersten Auslass (75) und den zweiten Auslass (76) abzudecken, wobei die Steuerstütze (79) außerhalb des Rohrs (74) angeordnet ist, um das Plattenelement (78) zum Schwenken anzutreiben.

7. Mehrspindel-Bearbeitungsmaschine mit Werkzeugwechselmechanismus nach Anspruch 6, wobei, wenn die Steuerstütze (79) das Plattenelement (78) antreibt, um den ersten Auslass (75) zu bedecken, die Staubsammelvorrichtung (72) gestartet wird, um Luft anzusaugen und die Düse (41) so zu steuern, dass sie mit dem Versprühen von Schneidöl aufhört; und wenn die Steuerstütze (79) das Plattenelement (78) antreibt, um den zweiten Auslass (76) zu bedecken, die Staubsammelvorrichtung (72) automatisch geschlossen wird, um die Düse (41) so zu steuern, dass sie Schneidöl versprüht.

8. Mehrspindel-Bearbeitungsmaschine mit Werkzeugwechselmechanismus nach Anspruch 1, wobei der Befestigungshalter (22) ein Seitenteil (23) und zwei Positionierstäbe (24) aufweist, das Seitenteil (23) mit der sich drehenden Welle (21) verbunden ist und die beiden Positionierstäbe (24) von zwei Enden des Seitenteils (23) aus senkrecht verlaufen, um das Werkstück (10) daran zu fixieren.

## Revendications

1. Machine d'usinage multi-broches ayant un mécanisme de changement d'outil comprenant :
une base (1) ;
un dispositif porteur (2) comprenant un siège (20) déplaçable selon l'axe Z, un arbre rotatif (21) et un dispositif de maintien à fixation (22), l'arbre rotatif (21) étant fixé sur le siège (20) et entraînant le siège (20) en rotation selon l'axe A, le dispositif de maintien à fixation (22) étant couplé à une partie d'extrémité de l'arbre rotatif (21) pour fixer sur celui-ci une pièce à usiner (10) ;
un mécanisme de changement d'outil (3) comprenant un support (33), le support (33) étant monté sur l'arbre rotatif (21) de façon à tourner avec l'arbre rotatif (21) et comprenant une pluralité de fentes (35) pour recevoir respectivement les outils (11) ;
une tête de travail (4) se déplaçant au-dessus du dispositif porteur (2) et du mécanisme de changement d'outil (3) selon les axes X et Y et comprenant une broche d'entraînement (40) montée sur une extrémité de celle-ci pour tourner axialement, et l'extrémité inférieure de la broche d'entraînement (40) autorisant l'engagement et le désengagement de l'outil (11) du mécanisme de changement d'outil (3) ;
**caractérisée par le fait que**
l'arbre rotatif (21) est fixé latéralement sur le siège (20) ;
le mécanisme de changement d'outil (3) comprend un dispositif de surveillance (34) fixé sur le siège (20) pour mesurer une longueur de l'outil (11) serré sur une broche d'entraînement (40) ;
la broche d'entraînement (40) est montée sur une extrémité inférieure de la tête de travail (4) ;
le mécanisme de changement d'outil (3) comprend un boîtier (30) et un logement (31), le boîtier (30) étant assemblé au siège (20) pour être traversé par l'arbre rotatif (21) et recevoir le support (33) et le dispositif de surveillance (34), et comprend une ouverture formée sur une extrémité supérieure de celui-ci, et le logement (31) étant assemblé au boîtier (30) pour ouvrir ou fermer l'ouverture du boîtier (30).

2. Machine d'usinage multi-broches avec mécanisme de changement d'outil selon la revendication 1, dans laquelle les fentes (35) sont formées sur une surface latérale supérieure et une surface latérale inférieure du support (33) selon un agencement linéaire.

3. Machine d'usinage multi-broches avec mécanisme de changement d'outil selon la revendication 1, dans laquelle les fentes (35) sont formées sur une surface latérale supérieure et une surface latérale inférieure du support (33) selon un agencement espacé de façon annulaire.

4. Machine d'usinage multi-broches avec mécanisme de changement d'outil selon la revendication 1, comprenant en outre un dispositif d'entraînement latéral (5) et un dispositif d'entraînement vertical (6), le dispositif d'entraînement latéral (5) étant situé sur la base (1) pour amener la tête de travail (40) à se déplacer latéralement, le dispositif d'entraînement vertical (6) étant fixé sur la base (1) et situé sur une extrémité avant d'un côté du dispositif d'entraînement latéral (5) pour amener le siège (20) à se déplacer verticalement le long dudit côté du dispositif d'entraînement latéral (5).

5. Machine d'usinage multi-broches avec mécanisme de changement d'outil selon la revendication 4, dans laquelle le dispositif d'entraînement latéral (5) comprend un premier élément de guidage (50), un deuxième élément de guidage (51), un socle de travail (52), un premier dispositif d'entraînement (53) et un deuxième dispositif d'entraînement (54), le premier élément de guidage (50) étant monté sur la base (1), le deuxième élément de guidage (51) étant fixé sur le premier élément de guidage (51) pour se déplacer le long de l'axe X, le socle de travail (52) étant fixé au deuxième élément de guidage (51) pour se déplacer le long de l'axe Y, le premier dispositif d'entraînement (53) étant disposé sur le premier élément de guidage (50) pour entraîner en déplacement le deuxième élément de guidage (51), le deuxième dispositif d'entraînement (54) étant fixé sur le deuxième élément de guidage (51) pour entraîner en déplacement le socle de travail (52), la tête de travail (4) étant reliée au socle de travail (52) ;
le dispositif d'entraînement vertical (6) comprend un troisième élément de guidage (60) et un troisième dispositif d'entraînement (61), le troisième élément de guidage (60) étant disposé sur la base (1), le siège (20) étant fixé sur le troisième élément de guidage (60) pour se déplacer le long de l'axe Z, le troisième dispositif d'entraînement (61) étant fixé sur le troisième élément de guidage (60) pour entraîner en déplacement le siège (20).

6. Machine d'usinage multi-broches avec mécanisme de changement d'outil selon la revendication 5, dans laquelle la tête de travail (4) comprend au moins une buse (41) pour pulvériser de l'huile de coupe ou de l'air, et la machine d'usinage multi-broches avec le mécanisme de changement d'outil (3) comprend en outre un mécanisme de collecte de poussières (7) ayant une gouttière (70), un réservoir (71), un collecteur de poussières (72) et un dispositif de commutation (73), la gouttière (70) étant disposée sur un côté inférieur du dispositif porteur (2) de la base (1) et comprenant un tuyau (74) communiquant avec une partie inférieure de celui-ci, le tuyau (74) comprenant une première sortie (75) sur une extrémité inférieure de celui-ci et une seconde sortie (76) sur une paroi d'un côté de celui-ci, le collecteur de poussières (72) étant relié à la seconde sortie (76) à l'aide d'un tube de liaison (77), le dispositif de commutation (73) comprenant un élément plaque (78) et une tige de commande (79), l'élément plaque (78) étant disposé dans le tuyau (74) pour recouvrir de façon amovible la première sortie (75) et la seconde sortie (76), la tige de commande (79) étant disposée à l'extérieur du tuyau (74) pour commander le basculement de l'élément plaque (78).

7. Machine d'usinage multi-broches avec mécanisme de changement d'outil selon la revendication 6, dans laquelle, lorsque la tige de commande (79) commande l'élément plaque (78) pour qu'il recouvre la première sortie (75), le collecteur de poussières (72) est démarré pour aspirer l'air et commander la buse (41) pour qu'elle arrête de pulvériser de l'huile de coupe ; et, lorsque la tige de commande (79) commande l'élément plaque (78) pour qu'il recouvre la seconde ouverture (76), le collecteur de poussières (72) est automatiquement fermé pour commander la buse (41) pour qu'elle pulvérise de l'huile de coupe.

8. Machine d'usinage multi-broches avec mécanisme de changement d'outil selon la revendication 1, dans laquelle le dispositif de maintien à fixation (22) comprend un corps latéral (23) et deux tiges de positionnement (24), le corps latéral (23) étant couplé à l'arbre rotatif (21) et les deux tiges de positionnement (24) s'étendant verticalement à partir de deux extrémités du corps latéral (23) pour fixer sur celles-ci la pièce à usiner (10).
